# EUROPEAN PATENT SPECIFICATION

(11) **EP 0 766 911 B1**
(45) Date of publication and mention of the grant of the patent: **11.04.2001**
(21) Application number: 96307205.3
(22) Date of filing: 02.10.1996
(51) Int. Cl.: A01D 34/74

(54) **Cutting-height adjustment for lawnmower**
Höheneinstellvorrichtung für Rasenmäher
Réglage de hauteur de coupe d'une tondeuse à gazon

(30) Priority: 03.10.1995 GB 9520125
(43) Date of publication of application: 09.04.1997
(73) Proprietor: ELECTROLUX OUTDOOR PRODUCTS LIMITED, Newton Aycliffe, Co Durham DL5 6UP (GB)
(72) Inventor: Mattocks, Andrew Ian, Darlington, Co. Durham DL2 2LY (GB); Bowden, Michael, Newton Aycliffe, Co. Durham, DL5 4XF (GB); Renfrew, Bruce James, Leicester, LE2 8PF (GB)
(74) Representative: Pratt, David Martin

(56) References cited:
- EP-A- 0 531 071
- CH-A- 560 501
- DE-A- 1 482 243
- DE-A- 2 127 247
- DE-U- 1 948 538
- GB-A- 992 840
- GB-A- 1 029 110
- US-A- 2 671 299
- US-A- 2 810 251
- US-A- 4 321 784

## Description

This invention relates to a lawnmower, and in particular to a lawnmower in which the height of cut of grass is adjustable.

Most conventional lawnmowers include some means for adjusting the height of cut of the mower. This feature is important since different people like to cut their lawns to different lengths, and many people cut different areas of their lawns to different lengths. It is, therefore, desirable to produce a lawnmower which may be simply adjusted in order to change the height of cut.

Wheeled lawnmowers may be designed to have an adjustable height of cut quite easily, since their wheels or rollers can be connected to a housing in a number of different positions, each position corresponding to a different height of cut. For example, WO93/01706 discloses a lawnmower having a fixed frame carrying four wheels and surrounded by a protective skirt, a secondary frame being movable relative to the fixed frame. The secondary frame carries a cutting components assembly including a motor and a cutter blade. The secondary frame is mounted on the fixed frame by two pairs of tilting levers, each lever being pivotally mounted on the fixed frame about a first pivot point, and on the secondary frame about a second pivot point. The secondary frame is raised by angularly displacing one pair of tilting levers, the displacement causing the other pair of tilting levers also to be displaced. This, therefore, lifts the secondary frame whilst maintaining the secondary frame level. This lawnmower requires a large number of components in order to adjust the height, and so is expensive to manufacture. There are many pivotable connections which make the mower complicated to construct and difficult to maintain. Furthermore, the components used for raising and lowering the height of cut could not easily be adapted for use with a hover mower.

US 2671299 discloses a lawnmower in which a cutter blade is arranged to rotate about a vertical axis and is driven by a motor. The motor is mounted on a bed plate which is supported above the ground by three wheels, two of which are height adjustable in order to raise or lower the height of cut of the blade.

The height of cut of most hover mowers is difficult to adjust, since adjustment is normally made by inserting or removing spacers between the cutter blade and the drive shaft to which the cutter blade is bolted. The adjustment involves unbolting the blade from the drive shaft, inserting or removing spacers, and bolting the blade back onto the drive shaft. This operation is involved and time consuming. The bolt holding the cutter blade and the spacers is likely to be covered in compacted grass, making removal difficult, and the operator must store the removed spacers safely in order that they may be re-used.

An aim of the present invention is to provide a lawnmower which overcomes or reduces some of the above difficulties connected with known lawnmowers.

A lawnmower according to the present invention comprises a housing; a cutter unit supported by the housing and comprising a rotatable cutter blade; a motor; and a drive line drivingly connecting the motor and the cutter blade; characterised in that the cutter unit is pivotally mounted for movement relative to the housing about a single horizontal axis, whereby angular movement of the cutter unit about the axis raises and lowers the height of cut of the cutter blade.

This permits a simple adjustment of the height of cut of the lawnmower. This invention is particularly, although not exclusively, applicable to hover-type lawnmowers.

In a preferred embodiment, the lawnmower further comprises adjustment means for adjusting the cutter unit into any of a plurality of discrete angular positions to raise and lower the height of cut of the cutter blade in discrete steps.

Alternatively, the lawnmower further comprises adjustment means for continuously adjusting the cutter unit into any position within a range of positions to raise and lower the height of cut of the cutter blade.

Advantageously, the adjustment means is a lever.

Preferably, the lawnmower further comprises a handle for controlling the mower, and a remote height adjustment actuator disposed on the handle for remotely actuating the adjustment means.

Preferably, the cutter unit further comprises the motor and the drive line, since this simplifies the transmission of power from the motor to the cutter blade.

In a preferred embodiment, the lawnmower further comprises a locking mechanism for locking the cutter unit in any one of a plurality of different angular positions, in order that the height of cut cannot accidentally be changed.

Preferably, the locking mechanism comprises a rack disposed on the blade housing and a retractable bolt disposed on the lever, the retractable bolt being selectively engageable along the rack.

A lawnmower constructed in accordance with the invention will now be described, by way of example, with reference to the drawings in which:
Figure 1 is a schematic side elevation of the lawnmower with its cutter blade in its uppermost position;
Figure 2 is a view similar to that of Figure 1, but showing the lawnmower with the cutter blade in its lowermost position; and
Figure 3 shows a locking mechanism for locking the cutter unit of the lawnmower in any one of a plurality of positions.

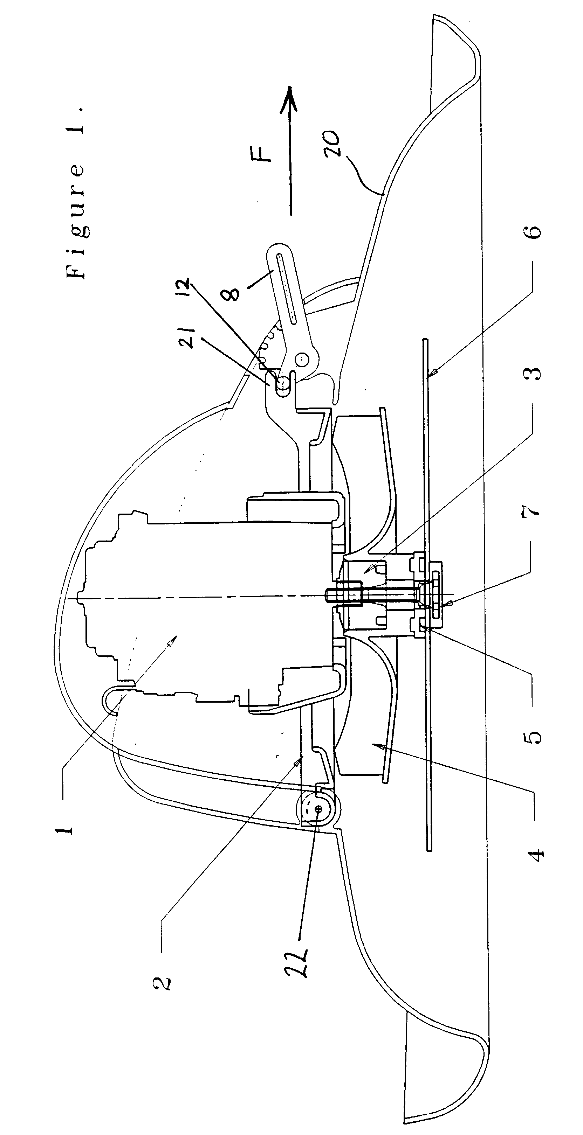

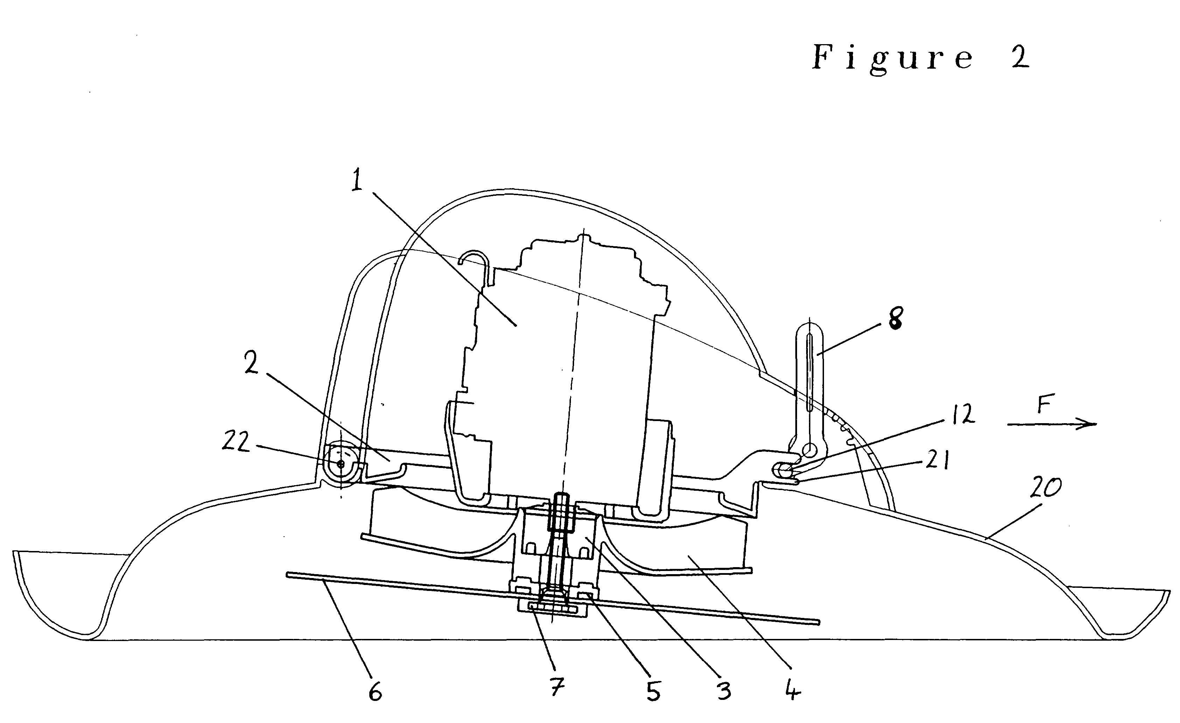

Referring to the drawings, Figures 1 and 2 show a hover lawnmower including a rigid hood 20 which forms a cutting chamber surrounding a cutter blade 6 which is rotatable about a vertical axis. A motor 1 is connected to the cutter blade 6 through a drive line to drive the cutter blade 6. The drive line includes a drive nut 3 carried on a drive shaft of the motor 1, a spacer 5, and a blade bolt 7 which attaches the cutter blade 6 to the drive line. An impeller 4 is attached to the drive line to rotate within the hood 20.

The motor 1 is carried on a motor mounting plate (or chassis) 2 which is attached to the hood 20 to pivot about a fulcrum 22. The motor 1, the drive line, the impeller 4, the chassis 2 and the cutter blade 6 constitute a cutter unit which pivots with respect to the hood 20 about the fulcrum 22. The fulcrum 22 is disposed towards the rear of the hood when considered in the normal direction of movement of the mower (indicated by arrow F), and has an axis of rotation disposed horizontally across the mower. The chassis 2 extends towards the front of the mower, the rearmost part of the chassis being bifurcated to form a slot which is supported by an adjustment mechanism (which is described below) which lifts and lowers the foremost part of the chassis causing it to pivot about the fulcrum 22.

The motor 1 is mounted towards the centre of the chassis 2, with the drive line extending through the chassis and through the hood 20. The chassis 2 and the hood 20 also include apertures adjacent to the motor 1. The impeller 4 draws air through the apertures into the cutting chamber in order to produce high pressure air under the hood 20. This high pressure air escapes from the cutting chamber between the hood 20 and the ground upon which it is supported. The escaping air causes the mower to be lifted a small distance above the ground, i.e. to hover.

The high pressure air within the hood 20 and the air escaping therefrom causes the hood to be supported in a substantially level configuration above the ground. The hood 20, therefore, acts as a platform on which the chassis 2, the motor 1, the cutter blade 6 and the drive line are mounted.

Figure 1 shows the lawnmower with the rearmost part of the chassis 2 at its highest position, and this position corresponds to the greatest height of cut of grass. In this position, the cutter blade 6 rotates in a horizontal plane about a vertical axis. As the mower is pushed forwards by an operator, the grass is cut by the cutter blade mainly at the front of the mower as the cutter blade 6 is driven through uncut grass.

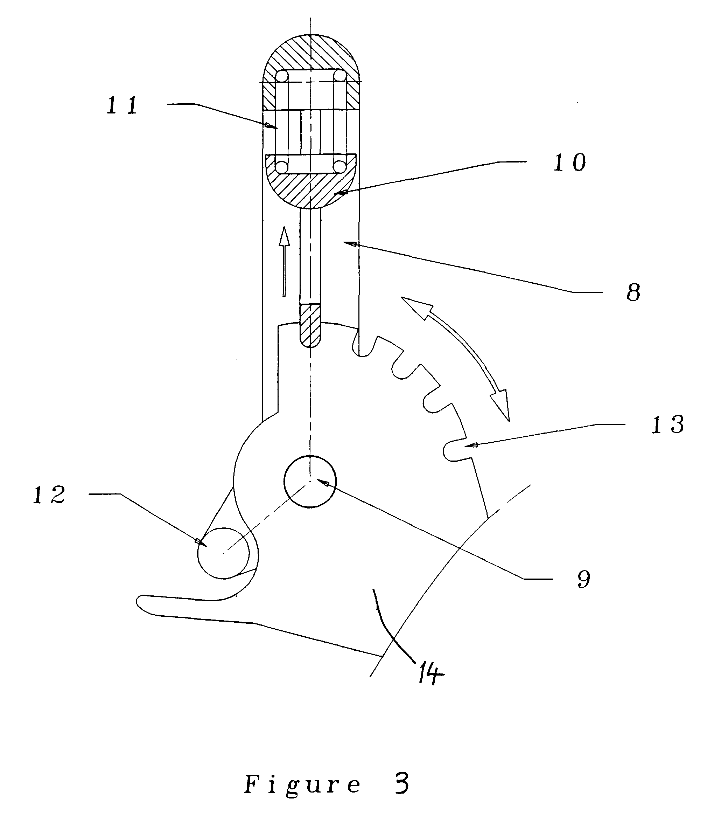

To lower the height of cut, the chassis 2 is lowered about the fulcrum 22 by the adjustment mechanism. As shown in Figure 3, the adjustment mechanism includes a lever 8 mounted for rotation about a pivot pin 9 disposed on the hood 20, a support pin 12 which engages with the slot at the bifurcated end of the chassis 2, a locking bolt 10 disposed on, and movable along, the lever, and a spring 11 for biassing the locking bolt towards the pivot pin. The locking bolt 10 includes a knob by which an operator moves the bolt along the lever 8. The support mechanism includes a series of recesses 13 disposed in a support plate 14 attached to the hood 20. The locking bolt 10 is engageable in each of the recesses 13 to prevent the lever 8 from moving. The locking bolt 10 is biassed by the spring 11 into one of the recesses 13. To adjust the height of cut of the mower, an operator must move the locking bolt 10 out of the engaged recess 13 against the action of the spring 11 by lifting the knob of the bolt. The lever 8 is then pivoted about the pin 9, in order to adjust the height of cut, and the locking bolt 10 is released by the operator into engagement with another recess 13, thereby locking the lever in a new position.

Figure 2 shows the lawnmower adjusted to a position which corresponds to the lowest height of cut by the cutter blade 6. To move the cutter blade 6 into this position, the lever 8 is lifted by the operator which causes the end of the chassis 2 remote from the fulcrum 22 to be lowered. The chassis 2, the motor 1, the cutter blade 6 and the drive line are lowered with respect to the hood 20 about the fulcrum 22 in order that the cutter blade will cut the grass at a lower height. The lowering of the chassis 2 causes the cutter blade 6 to tilt slightly so that the cutter blade will cut the grass slightly lower at the front than at the rear. In this position, as the mower is pushed forward, grass is cut at the front of the mower, and the cutter blade 6 towards the rear of the mower is raised above the level of the cut grass. The grass is generally cut once, thereby keeping the required power of the mower to a minimum. When cutting grass around an obstruction, such as a wall or flower bed, it is normal to push the mower forwards towards that obstruction. The front edge of the cutter blade 6 will then cut the grass around the obstruction to the same height as the grass cut in the middle of a lawn.

In a preferred embodiment, the fulcrum 22 is disposed at the very rear of the mower when considered in its normal direction of use, in which case the cutter blade 6 is movable up and down with only a small angular tilt.

In another preferred embodiment, the axis of the fulcrum 22 crosses the axis of rotation of the cutter blade 6.

In a further embodiment (not shown), the adjustment mechanism includes a cable leading to the handle of the lawnmower, and a further lever disposed on the handle. The height of cut of the mower may then be adjusted from the handle by operating the further lever which moves the lever 8 via the cable.

In another embodiment (not shown), the chassis 2, upon which the motor 1 and the cutter blade 6 are carried, is attached to the hood 20 to pivot about a fulcrum disposed towards the front of the hood, and the chassis is supported towards its rear by the adjustment mechanism. When the chassis 2 is lowered at the rear, the cutter blade 6 will tilt, so that the cutter blade will cut the grass slightly lower at the rear than at the front. In this position, as the mower is pushed forwards, grass is first cut at the front of the mower at one height, and then cut at a lower height at the rear of the mower. This double cutting of the grass leaves a windrow of finer grass cuttings which will form a better mulch on the lawn if not collected. In this embodiment, the lever 8 is located towards the rear of the mower in order that the operator can reach the level easily without walking around the mower.

## Claims

1. A lawnmower comprising:
a housing (20);
a cutter unit supported by the housing (20) and comprising a rotatable cutter blade (6);
a motor (1); and
a drive line drivingly connecting the motor (1) and the cutter blade (6),
characterised in that the cutter unit is pivotally mounted for movement relative to the housing (20) about a single horizontal axis, whereby angular movement of the cutter unit about the axis raises and lowers the height of cut of the cutter blade (6).

2. A lawnmower according to claim 1, further comprising adjustment means (28, 12) for adjusting the cutter unit into any of a plurality of discrete angular positions to raise and lower the height of cut of the cutter blade (6) in discrete steps.

3. A lawnmower according to claim 1, further comprising adjustment means (28, 12) for continuously adjusting the cutter unit into any position within a range of positions to raise and lower the height of cut of the cutter blade (6).

4. A lawnmower according to claim 2 or claim 3, wherein the adjustment means is a lever (8).

5. A lawnmower according to any one of claims 2 to 4, further comprising a handle for controlling the mower, and a remote height adjustment actuator disposed on the handle for remotely actuating the adjustment means.

6. A lawn mower according to any one of claims I to 5, wherein the cutter unit further comprises the motor (1) and the drive line.

7. A lawnmower according to claim 6, wherein the cutter unit further comprises a chassis (2) pivotally mounted on the housing (20) and upon which the motor (1) is mounted.

8. A lawnmower according to any one of claims 1 to 7, further comprising a locking mechanism (8, 10, 13) for locking the cutter unit in any one of a plurality of different angular positions.

9. A lawnmower according to claim 8 when appendant to claim 4, wherein the locking mechanism comprises a rack (13) disposed on the housing (20) and a retractable bolt (10) disposed on the lever (8), the retractable bolt (10) being selectively engageable along the rack (13).

10. A lawnmower according to any one of claims 1 to 9, wherein said single horizontal axis is disposed towards the rear of the lawnmower when considered in the normal direction of use.

## Patentansprüche

1. Rasenmäher mit:
einem Gehäuse (20) ;
einer von dem Gehäuse (20) gehaltenen Schneideinheit mit einer drehbaren Schneidklinge (6),
einem Motor (1) ; und
eine Transmission, die den Motor (1) und die Schneidklinge (6) verbindet,
dadurch gekennzeichnet, dass die Schneideinheit schwenkbar zur Bewegung relativ zu dem Gehäuse (20) um eine einzige horizontale Achse montiert ist, wobei eine Winkelbewegung der Schneideinheit um die Achse die Höhe des Schnittes der Schneidlänge (6) vergrößert oder verringert.

2. Rasenmäher nach Anspruch 1, weiterhin mit einer Einstelleinrichtung (28, 12) zur Einstellung der Schneideinheit in eine von zahlreichen einzelnen Winkelstellungen zum Anheben und Absenken der Schneidhöhe der Schneidklinge (6) in diskreten Schritten.

3. Rasenmäher nach Anspruch 1, weiterhin mit einer Einstelleinrichtung (28, 12) zur kontinuierlichen Einstellung der Schneideinheit in irgendeine Stellung innerhalb eines Bereichs zum Erhöhen und Verringern der Schneidhöhe der Schneidklinge (6).

4. Rasenmäher nach Anspruch 2 oder 3, bei dem die Einstelleinrichtung aus einem Hebel (8) besteht.

5. Rasenmäher nach einem der Ansprüche 2 bis 4, weiterhin mit einer Handhabe zur Steuerung des Mähers und einer davon entfernten Betätigungseinrichtung zur Höheneinstellung, die auf der Handhabe zur Fernbetätigung der Einstelleinrichtung angeordnet ist.

6. Rasenmäher nach einem der Ansprüche 1 bis 5, bei dem die Schneideinheit weiterhin den Motor (1) und die Transmission aufweist.

7. Rasenmäher nach Anspruch 6, bei dem die Schneideinheit weiterhin ein Gestell (2) aufweist, das schwenkbar an dem Gehäuse (20) montiert ist und auf dem der Motor (1) angebracht ist.

8. Rasenmäher nach einem der Ansprüche 1 bis 7, weiterhin mit einer Arretiereinrichtung (8, 10, 13) zum Arretieren der Schneideinheit in irgendeiner der zahlreichen unterschiedlichen Winkelstellungen.

9. Rasenmäher nach Anspruch 8 in Abhängigkeit von Anspruch 4, bei dem der Arretiermechanismus eine auf dem Gehäuse angeordnete Zahnstange (13) und einen auf dem Hebel (8) angeordneten rückziehbaren Bolzen (10) aufweist, wobei der rückziehbare Bolzen (10) wahlweise längs der Zahnstange (13) in Eingriff bringbar ist.

10. Rasenmäher nach einem der Ansprüche 1 bis 9, bei dem die einzelne horizontale Achse, in normaler Gebrauchsrichtung gesehen, in Richtung auf die Rückseite des Rasenmähers angeordnet ist.

## Revendications

1. Tondeuse à gazon comprenant :
un carter (20) ;
une unité de coupe supportée par le carter (20) et incluant une lame de coupe rotative (6) ;
un moteur (1) ; et
une transmission reliant en entraînement le moteur (1) et la lame de coupe (6) ;
caractérisée en ce que l'unité de coupe est montée de façon pivotante pour un mouvement par rapport au carter (20) autour d'un seul axe horizontal, de sorte que le mouvement angulaire de l'unité de coupe autour de cet axe accroît et réduit la hauteur de coupe de la lame de coupe (6).

2. Tondeuse à gazon selon la revendication 1, comprenant en outre des moyens de réglage (8, 12) pour régler l'unité de coupe à une quelconque d'une pluralité de positions angulaires distinctes, afin d'accroître et de réduire la hauteur de coupe de la lame de coupe (6) par paliers distincts.

3. Tondeuse à gazon selon la revendication 1, comprenant en outre des moyens de réglage (8., 12) pour régler de façon continue l'unité de coupe à une position quelconque à l'intérieur d'une plage de positions, afin d'accroître et de réduire la hauteur de coupe de la lame de coupe (6).

4. Tondeuse à gazon selon la revendication 2 ou la revendication 3, dans laquelle les moyens de réglage comprennent un levier (8).

5. Tondeuse à gazon selon une quelconque des revendications 2 à 4, comprenant en outre une poignée pour commander la tondeuse, et un actionneur de réglage de hauteur à distance disposé sur la poignée pour la commande à distance des moyens de réglage.

6. Tondeuse à gazon selon une quelconque des revendications 1 à 5, dans laquelle l'unité de coupe comprend en outre le moteur (1) et la transmission.

7. Tondeuse à gazon selon la revendication 6, dans laquelle l'unité de coupe comprend en outre un châssis (2) monté de façon pivotante sur le carter (20) et sur lequel le moteur (1) est monté.

8. Tondeuse à gazon selon une quelconque des revendications 1 à 7, comprenant en outre un mécanisme de verrouillage (8, 10, 13) pour bloquer l'unité de coupe dans une quelconque d'une pluralité de positions angulaires différentes.

9. Tondeuse à gazon selon la revendication 8 lorsqu'elle dépend de la revendication 4, dans laquelle le mécanisme de verrouillage comprend une crémaillère (13) disposée sur le carter (20) et un verrou rétractable (10) disposé sur le levier (8), le verrou rétractable (10) pouvant venir sélectivement en prise le long de la crémaillère (13).

10. Tondeuse à gazon selon une quelconque des revendications 1 à 9, dans laquelle le dit un seul axe horizontal est disposé vers l'arrière de la tondeuse avec référence à la direction normale d'utilisation.
